# EUROPÄISCHE PATENTSCHRIFT

(11) **EP 0 439 065 B1**
(45) Veröffentlichungstag und Bekanntmachung des Hinweises auf die Patenterteilung: **13.12.1995**
(21) Anmeldenummer: 91100560.1
(22) Anmeldetag: 18.01.1991
(51) Int. Cl.: H04M 1/57, H04M 1/274

(54) **Teilnehmerendeinrichtung mit Zwischenspeicher und einer damit verbundenen Wählhilfe**
Subscriber set with a buffer memory and abbreviated dialling function
Poste d'abonné pourvu d'une mémoire intermédiaire associée à une fonction de numérotation abrégée

(30) Priorität: 25.01.1990 DE 4002152
(43) Veröffentlichungstag der Anmeldung: 31.07.1991
(73) Patentinhaber: Grundig E.M.V. Elektro-Mechanische Versuchsanstalt Max Grundig GmbH & Co. KG, 90762 Fürth (DE)
(72) Erfinder: Hegendoerfer, Max, Grundig E.M.V., W-8510 Fuerth (DE)

(56) Entgegenhaltungen:
- EP-A- 0 268 739
- DE-A- 2 931 254
- DE-A- 2 933 477
- DE-A- 3 128 529
- DE-A- 3 540 301
- US-A- 4 304 968
- PATENT ABSTRACTS OF JAPAN, Bd. 9, Nr. 23 (E-293)(1746) 30. Januar 1985;& JP- A-59 168 756

## Beschreibung

Die Erfindung betrifft eine Teilnehmerendeinrichtung mit einer Wählhilfe gemäß dem Oberbegriff des Patentanspruchs 1.

Moderne Teilnehmerendeinrichtungen weisen eine Vielzahl von Leistungsmerkmalen auf, die insbesondere das Fernsprechen bequemer, schneller und effektiver machen. Hierzu zählen beispielsweise:
- Kurzwahl, bei der häufig benötigte Rufnummern mit bis zu 18 Ziffern in einem digitalen Speicher einspeicherbar sind. Durch Betätigen zweier Tasten wird automatisch ein Verbindungsaufbau eingeleitet und die gewünschte Rufnummer angewählt.
- Zielwahl, bei der Namenstasten direkt mit den Namen von Gesprächspartnern beschriftet werden, mit denen der Teilnehmer häufig telefoniert. Die Rufnummer wird in einem Speicher der Teilnehmerendeinrichtung gespeichert und nach Betätigung der Namenstaste wird ebenfalls ein automatischer Verbindungsaufbau eingeleitet.
- Display (alphanumerische Anzeige), welches zur Kontrolle gewählter Rufnummern und zur Darstellung anderer Informationen, wie z.b. Gebühren in Gebühreneinheiten oder DM-Beträgen dient.
- Notizbuchfunktion, d.h. Rufnummerneingabe der während des Gesprächs vom anrufenden Teilnehmer mitgeteilten Rufnummer. Diese Rufnummer wird über die Tastatur in einem digitalen Speicher der Teilnehmerendeinrichtung eingegeben und kann nach dem Gespräch für einen automatischen Verbindungsaufbau ausgelesen werden.
- Direktruf, auch Babyruf genannt. Sobald der Teilnehmer den Fernhörer abnimmt und eine beliebige Zifferntaste der Tastatur betätigt, wird eine der gespeicherten Rufnummern zu einem automatischen Verbindungsaufbau ausgelesen.
- Wahlwiederholung, bei der die zuletzt gewählte Rufnummer gespeichert wird. Wenn der gewünschte Teilnehmer nicht erreichbar ist, wird nach Tastenbetätigung die Wahl automatisch wiederholt. Bei der erweiterten Wahlwiederholung kann zwischendurch auch mit einem anderen Teilnehmer telefoniert werden.
- Automatische Hinweisansage, bei der der Text für die Ansage in einem in der Teilnehmerendeinrichtung angeordneten Speicher gespeichert ist, so daß dem anrufenden Teilnehmer z.B. eine Auskunft gegeben werden kann, wann der angerufene Teilnehmer wieder erreichbar ist.

Weitere Ausführungsformen von modernen Teilnehmereinrichtungen bestehen beispielsweise aus der Kombination von Komforttelefon und Btx-Gerät (sog. Multi-Tel). Diese Teilnehmerendeinrichtungen enthalten unter anderem ein Telefonregister für mehrere hundert Rufnummern, die Funktion der aphabetischen Sortierung, ein Senderegister, Zielinformationsspeicher für Telefon-, Btx-, Sonder- und Merkregister usw.. Allen diesen modernen Teilnehmereinrichtungen ist gemeinsam, daß diese einen Speicher zur Speicherung von mit einer Tastatur eingegebenen Daten, insbesondere Teilnehmerrufnummern, Teilnehmeradressen usw., aufweisen und daß diese Daten an einer Anzeigeeinrichtung darstellbar sind. Diese gespeicherten Daten können zum Verbindungsaufbau herangezogen werden, wie dies beispielsweise in der DE-A-29 37 355 oder in der DE-C-29 33 477 ausführlich erläutert und beschrieben ist.

Weiterhin ist aus der EP-A2-0 268 739 ein Verfahren zum Speichern und Wählen von Rufnummern bekannt, bei dem die vom Teilnehmer gesprochenen, zu speichernden Namen mittels eine Vocoders in Digitalsignale umgewandelt werden. Das so angelegte akustische Teilnehmerverzeichnis kann durch das Betätigen der Tastatur abgerufen und über den Vocoder hörbar gemacht werden.

Weiterhin sind auch Nachrichtennetze bekannt, bei denen die den anrufenden Teilnehmer kennzeichnenden Daten zur Teilnehmerendeinrichtung des angerufenen Teilnehmers übertragen und dort in einer Anzeigeeinrichtung dargestellt werden. Beispielsweise ist aus der DE-B-2 260 023 eine Schaltungsanordnung zur Sichtbarmachung der Fernsprechnummer (Rufnummer) eines rufenden Teilnehmers bei dem Fernsprechapparat des angerufenen Teilnehmers bekannt. Für die Übermittlung der Rufnummer des rufenden Teilnehmers befindet sich zu diesem Zweck in der Vermittlungsstelle eine Einrichtung.

Diese moduliert eine innerhalb des Tonfrequenzbandes liegende Sprachfrequenz mit den die Rufnummer bildenden Gleichstromkriterien und überträgt die Tonfrequenzzeichen zum angerufenen Teilnehmeranschluß. Die in den Tonfrequenzzeichen enthaltene Rufnummer wird ziffernweise von der Einrichtung zum angerufenen Teilnehmeranschluß übermittelt. Da erst darauffolgend das Signal für die Übermittlung des Rufsignals (Anrufstroms) zu dem gerufenen Teilnehmer erzeugt wird, kann der angerufene Teilnehmer schon feststellen, von wo der Anruf kommt, bevor er sich meldet. Es besteht auch die Möglichkeit den Anruf eines Teilnehmers festzustellen, welcher wegen einer vorübergehenden Abwesenheit des angerufenen Teilnehmers keine Anwort erhalten hat. Hierzu wird in Speicherelementen (Zählern) die Rufnummer des letzten anrufenden Teilnehmers gespeichert und kann durch Tastenbetätigung ausgelesen und angezeigt werden.

Weiterhin ist aus der DE-A-27 20 435 ein Verfahren und eine Vorrichtung zur Anzeige einer Telefoninformation (Fernsprechnummer) bekannt. Beim Anruf eines Teilnehmers überträgt das Telefonvermittlungsamt (Vermittlungsstelle) des anrufenden Teilnehmers eine im voraus gespeicherte Rufnummerinformation (Rufnummer) zu dem Telefonamt (Vermittlungsstelle) des angerufenen Teilnehmers. Diese Rufnummerinformation (Rufnummer) wird zusammen mit den Rufsignalen übertragen, beispielsweise bei einer Ausführungsform in der Pausenzeit zwischen den Rufsignalen. An dem Teilnehmerapparat des angerufenen Teilnehmers werden die Ziffern der Rufinformation (Rufnummer) auf einer Reihe von Anzeigevorrichtungen angezeigt. Die daraus bekannte Vorrichtung weist unter anderem einen Speicher für die Rufnummer eines anrufenden Teilnehmers auf, welcher in Form einer elektronischen Druckvorrichtung ausgestaltet ist und parallel zur Anzeigevorrichtung geschaltet ist. Bei einer weiteren Ausführungsform ist der Vorrichtung ein Telefonanrufbeantworter parallelgeschaltet. Hierdurch können die Rufnummern der während der Abwesenheit des Teilnehmers eingegangenen Anrufe durch den Drucker gedruckt oder durch den Anrufbeantworter gespeichert werden.

In der FTZ-Richtlinie 1 TR6 der Deutschen Bundespost: "Kennzeichenaustausch zwischen DIVO (ISDN-Vermittlungsstellen) und ISDN-Teilnehmereinrichtungen-ISDN-D-Kanal-Protokoll-(Schicht 2 und 3)" ist auf den Seiten 134/135 die Anzeige der Rufnummern des A-Teilnehmers beim B-Teilnehmer beschrieben und erläutert. Hinsichtlich Kennzahl und Rufnummer erfolgt die Signalisierung zur Steuerung dieses Dienstmerkmals und somit die Anzeige bei jedem Endgerät grundsätzlich für alle ankommenden Rufe. Nur für den Fall, daß der ankommende Ruf aus einem analogen Fernmeldenetz übermittelt wurde, oder wenn es sich um eine Geheimnummer handelt, werden Kennzahl bzw. Rufnummer nicht übertragen.

Bei analogen Fernmeldenetzen wird in der Regel bei einem personell nicht besetzten Teilnehmeranschluß ein ankommender Anruf durch eine automatisch arbeitende private Zusatzeinrichtung (Anrufbeantworter) entgegengenommen. Moderne private Zusatzeinrichtungen sind häufig eine Kombination aus automatischem Anrufbeantworter oder Auskunftgeber mit automatischer Wählhilfe oder mit automatischer Wählhilfe und zusätzlicher Wahlwiederholung (Wählautomaten), wie dies beispielsweise in der DE-A-36 08 238 bzw. der inhaltsgleichen DE-A-36 08 239 beschrieben ist. Für die Programmierung des aus der DE-A-36 08 238 bzw. DE-A-36 08 239 bekannten "Telefoncomputers" sind eine Vielzahl von Eingaben vorzunehmen: z.B. Datum und Uhrzeit, Alarm und Terminzeiten, Aufnahmezeit für ankommende Gespräche, Fernabfrage, Codes, Eurosignalrufnummern oder sonstige Rufnummern, Rufnummern und Amtskennziffern für Kurzwahl, Zielwahl usw. .

Moderne Teilnehmerendeinrichtungen bzw. Zusatzeinrichtungen weisen in der Regel eine ganze Reihe von Leistungsmerkmalen zur Erhöhung des Bedienkomforts auf. Hierzu ist meist ein digitaler Speicher für Daten, insbesondere Rufnummern, Namen, Adressen, usw., in der Teilnehmerendeinrichtung angeordnet, wobei der Inhalt des Speichers entweder an einer Anzeige optisch darstellbar oder akustisch ausgebbar ist. Aus der US-A-4 304 968 ist ein Anrufbeantworter bekannt, welcher einen Speicher (first section) zur Speicherung von mit einer Tastatur eingegebenen Daten, eine Anzeigeeinrichtung und eine mit einer Wählhilfe, Tastatur und Anzeigeeinrichtung verbundene Steuereinrichtung aufweist. Weiterhin sind Zwischenspeicher (second and third memory sections) als zusätzliche Speicherbereiche zur Speicherung von die ankommenden Anrufe betreffenden Daten vorgesehen. Die Steuereinrichtung vergleicht automatisch die vom anrufenden Teilnehmer kommende Rufnummer mit denen im Speicher (first section) und im Falle übereinstimmender Rufnummer, werden dieser Rufnummer zugeordnete Daten aus dem Speicher (first section) ausgelesen und im Zwischenspeicher (second section) abgespeichert. Im Falle nicht übereinstimmender Rufnummer wird diese Rufnummer und die Zeit in einem anderen Zwischenspeicher (third section) gespeichert. In der Teilnehmerendeinrichtung werden somit die ankommenden Rufnummern automatisch in verschiedenen Zwischenspeichern gespeichert, um die gespeicherten Daten durch den angerufenen Teilnehmer später aus den verschiedenen Zwischenspeichern abrufen zu können.

Der Erfindung liegt die Aufgabe zugrunde, eine Teilnehmerendeinrichtung derart auszugestalten, daß auch bei vorübergehender Abwesenheit des Teilnehmers die über das Fernmeldenetz übertragenen Daten, z.B. Rufnummern, in der Teilnehmerendeinrichtung mit geringem zusätzlichen Speicheraufwand automatisch gespeichert und auf einfache Art und Weise durch den angerufenen Teilnehmer auslesbar sind und daß das Teilnehmerverzeichnis des angerufenen Teilnehmers weitgehend automatisch aktualisiert wird.

Diese Aufgabe wird bei einer gattungsgemäßen Teilnehmerendeinrichtung durch die kennzeichnenden Merkmale des Patentanspruchs 1 gelöst.

Die erfindungsgemäße Teilnehmerendeinrichtung erfordert vom angerufenen Teilnehmer für den Kommunikationsprozeß keine speziellen Kenntnisse, da der während seiner Abwesenheit angerufene Teilnehmer nach Rückkehr in gewohnter Weise die Verbindung zu einem anrufenden Teilnehmer herstellen kann. Der zusätzliche Schaltungsaufwand für den Zwischenspeicher ist vergleichsweise gering, da in der Regel der Speicher freie Speicherbereiche aufweist. Durch die Mitbenutzung der Wählhilfe (automatischen Wähleinrichtung) für zwischengespeicherte Rufnummern wird dem Benutzer ein hoher Bedienkomfort geboten, da er auch bei Abwesenheit und Rückkehr beispielsweise keine Rufnummerneingabe mehr vornehmen muß. Durch die automatische Ergänzung einer zwischengespeicherten Rufnummer mit den im Speicher vorhandenen Daten kann der Teilnehmer sofort erkennen, um welchen Gesprächspartner es sich handeln wird. Schließlich werden nur die noch nicht als bereits vorhanden erkannten Rufnummern auf freie Speicherplätze des Speichers automatisch gespeichert. Dadurch wird auf überraschend einfache Art und Weise der Vorteil erreicht, daß zur Aktualisierung des Teilnehmerverzeichnisses durch den Teilnehmer keine entsprechenden Eingaben vorzunehmen sind. Weiterhin ist von Vorteil, daß die Speichergröße des Zwischenspeichers relativ klein gewählt werden kann, da im Zwischenspeicher nur noch die Speicherplatznummer der Rufnummer im Speicher gespeichert werden muß.

Die Ausführungsform der Teilnehmerendeinrichtung gemäß Patentanspruch 2 weist den Vorteil auf, daß im Zwischenspeicher eine komplette Liste der während der Abwesenheit des Teilnehmers eingegangenen Anrufe enthalten ist. Durch die Darstellung dieser Liste auf der Anzeigeeinrichtung kann sich der Teilnehmer hierüber rasch informieren. Weitere Funktionen sind Scrolling, Blättern, usw. .

Die Ausführungsform der Teilnehmerendeinrichtung gemäß Patentanspruch 3 weist den Vorteil auf, daß der Verbindungsaufbau automatisch durchgeführt wird, so daß hierzu keine Eingabe und besondere Aufmerksamkeit des Teilnehmers erforderlich ist. Die Auswahl wird durch die Betätigung der Taste gesteuert, z.B. wird ein Cursor verschoben oder die jeweilige Rufnummer und sonstige Daten werden modifiziert dargestellt usw. .

Ergänzend hierzu werden gemäß der Ausführungsform nach Patentanspruch 4 zu jeder Rufnummer entsprechende Daten mit Hilfe der Tastatur durch den Teilnehmer hinzugefügt. Durch die alphabetische Einordnung neu übernommener Daten wird der Bedienkomfort für den Teilnehmer weiter verbessert.

Die Ausführungsform der Teilnehmerendeinrichtung gemäß Patentanspruch 5 weist den Vorteil auf, daß der anrufende Teilnehmer ergänzend zu seiner Rufnummer auch weitere Daten, z.B. Namen, Adresse, Uhrzeit wann erreichbar, usw. eingeben kann.

Durch die Ausführungsform der Teilnehmerendeinrichtung gemäß Patentanspruch 6 wird es dem anrufenden Teilnehmer ermöglicht zu überprüfen, ob die zwischengespeicherten Daten richtig sind.

Bei der Ausführungsform der Teilnehmerendeinrichtung gemäß Patentanspruch 7 wird davon ausgegangen, daß die Teilnehmerendeinrichtung sprachgesteuert ist. Die hierfür erforderlichen Einrichtungen werden mitbenutzt, um auch solche Daten speichern zu können, welche aus einem analogen Fernmeldenetz stammen oder welche, da es sich beispielsweise um eine Geheimnummer handelt, nicht übermittelt werden.

Die Ausführungsform der Teilnehmerendeinrichtung gemäß Patentanspruch 8 weist den Vorteil auf, daß auf einfache Art und Weise eine Bedienerführung des anrufenden Teilnehmers, beispielsweise zur ferngesteuerten Speicherung weiterer Daten im Zwischenspeicher, ermöglicht wird.

Bei der Ausführungsform der Teilnehmerendeinrichtung gemäß Patentanspruch 9 sind die zwischengespeicherten Informationen fernabfragbar. Diese Fernabfrage kann vom berechtigten Teilnehmer mit einem Codesender vorgenommen werden, wie dies beispielsweise für die Fernabfrage von Anrufbeantwortern an sich bekannt ist.

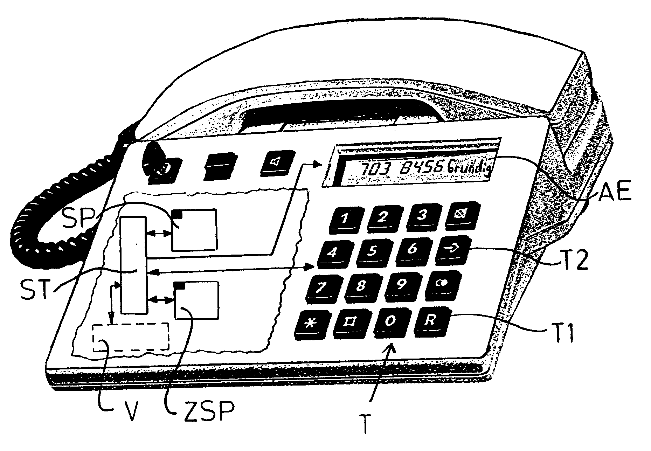

Die Erfindung wird im folgenden anhand einer in der Zeichnung dargestellten Ausführungsform näher beschrieben und erläutert.

Bei der in der Figur dargestellten Ausführungsform der Teilnehmerendeinrichtung wird von einem Komforttelefon ausgegangen. Die erfindungsgemäße Teilnehmerendeinrichtung ermöglicht die Zwischenspeicherung beliebiger Nachrichten und kann in unterschiedlich ausgestalteten Nachrichtennetzen (integriertes Digitalnetz IDN, analoges Fernsprechnetz, diensteintegrierendes Digitalnetz ISDN) für vermittelte Verbindungen eingesetzt werden.

Die in der Figur dargestellte Teilnehmerendeinrichtung enthält in an sich bekannter Weise einen Speicher SP zur Speicherung von mit einer Tastatur T eingegebener Daten, insbesondere Teilnehmerrufnummern, Namen der Teilnehmer, Teilnehmeradressen, usw.. Weiterhin weist die Teilnehmerendeinrichtung eine Anzeigeeinrichtung AE und eine mit dem Speicher SP, der Tastatur T und der Anzeigeeinrichtung AE verbundene Steuereinrichtung ST auf. Bei der in der Figur dargestellten Ausführungsform übernimmt die Steuereinrichtung ST u.a. die Funktion der Wählhilfe. In Ergänzung hierzu ist in der Teilnehmerendeinrichtung zusätzlich ein Zwischenspeicher ZSP angeordnet (oder ist ein freier Speicherbereich des Speichers SP vorgesehen), in welchem die von einem anrufenden Teilnehmer kommende Rufnummern gespeichert wird. Anschließend vergleicht die Steuereinrichtung ST automatisch die im Zwischenspeicher ZSP zwischengespeicherte Rufnummer mit denen im Speicher SP. Im Falle übereinstimmender Rufnummer werden die dieser Rufnummer zugeordneten Daten aus dem Speicher SP ausgelesen und zusätzlich zur im Zwischenspeicher ZSP zwischengespeicherten Rufnummer hinzugefügt. Eine solche Liste der Anrufe kann beispielsweise bei Abwesenheit des gerufenen Teilnehmers oder bei Aktivierung des Leistungsmerkmals "Ruhe vor dem Telefon" usw. erstellt werden. Im Falle "Ruhe vor dem Telefon" kann der angerufene Teilnehmer, nach Feststellung wer anruft, im Bedarfsfall die zwischengespeicherte Rufnummer löschen und automatisch durch eine Ansage dem anrufenden Teilnehmer mitteilen lassen, z.B. später nochmals anzurufen.

Der gerufene Teilnehmer kann diese zwischengespeicherte Liste mit einer Tastatur T1 aus dem Zwischenspeicher ZSP abrufen und an der Anzeigeeinrichtung AE sichtbar machen. Einen automatischen Verbindungsaufbau für eine durch Cursor oder auch entsprechend modifizierte Darstellung gekennzeichnete Rufnummer kann der Teilnehmer durch Betätigen einer Taste T2 einleiten. Werden die noch nicht als bereits vorhanden erkannten Rufnummern auf freie Speicherplätze des Speichers SP automatisch gespeichert, so kann die Speichergröße des Zwischenspeichers ZSP relativ klein gewählt werden, da im Zwischenspeicher ZSP nur noch die Speicherplatznummer der Rufnummer im Speicher SP gespeichert werden muß. Die Ergänzung jeder neu in den Speicher SP übernommenen Rufnummer durch Teilnehmeradresse, Name des Teilnehmers, usw. kann vom Benutzer mit Hilfe der Tastatur T vorgenommen werden. Durch die alphabetische Einordnung der neu übernommenen Daten mittels Steuereinrichtung ST kann auch ein umfangreiches Teilnehmerverzeichnis übersichtlich gestaltet werden.

Bei einer in der Zeichnung dargestellten Ausführungsform der Teilnehmerendeinrichtung weist diese einen Vocoder V, strichliniert angedeutet, auf. Diese Ausführungsform der Teilnehmerendeinrichtung ist dann besonders zweckmäßig, wenn diese an ein analoges Fernmeldenetz angeschlossen ist oder der anrufende Teilnehmer die Dateneingabe lediglich mit einem einfachen Fernsprechapparat vornehmen kann. Hierfür ist es zweckmäßig, eine entsprechende Bedienerführung mit im Zwischenspeicher ZSP oder Speicher SP gespeicherter Texte vorzunehmen. Gleiches gilt auch falls von dem anrufenden Teilnehmer ferngesteuert weitere Daten im Zwischenspeicher ZSP gespeichert oder abgerufen werden. Nach dem Speichern dieser Daten in dem Zwischenspeicher ZSP kann dem anrufenden Teilnehmer ein Quittungshörton oder eine sonstige Quittung übermittelt werden.

In weiterer Ausgestaltung der Teilnehmerendeinrichtung können in den Zwischenspeicher ZSP auch andere Informationen, z. B. Gebührenzählerstände für Gas, Wasser, Strom usw. automatisch gespeichert werden, welche vom berechtigten Teilnehmer fernabfragbar sind. Hierbei ist die Teilnehmerendeinrichtung in an sich bekannter Weise an einen Home-bus angeschlossen.

## Patentansprüche

1. Teilnehmerendeinrichtung mit einer Wählhilfe, welche einen Speicher (SP) zur Speicherung von mit einer Tastatur (T) eingegebenen Daten, insbesondere Teilnehmerrufnummer, Namen der Teilnehmer, Teilnehmeradressen usw., aufweist, mit einer Anzeigeeinrichtung (AE), mit einer mit der Wählhilfe, Tastatur (T) und Anzeigeeinrichtung (AE) verbundenen Steuereinrichtung (ST) und mit einem in der Teilnehmereinrichtung angeordneten Zwischenspeicher (ZSP), wobei die Steuereinrichtung (ST) einen Vergleich der vom anrufenden Teilnehmer kommenden Rufnummer mit den im Speicher (SP) abgespeicherten Rufnummern und anschließend eine Speicherung der vom anrufenden Teilnehmer kommenden Rufnummer steuert, **dadurch gekennzeichnet**, daß der Zwischenspeicher (ZSP), die Steuereinrichtung (ST) und der Speicher (SP) ferner derart ausgestaltet sind, daß im Zwischenspeicher (ZSP) nacheinander die von den anrufenden Teilnehmern kommenden Rufnummern gespeichert werden, daß die Steuereinrichtung (ST) automatisch die Rufnummer im Zwischenspeicher (ZSP) mit denen im Speicher (SP) vergleicht, daß im Falle übereinstimmender Rufnummer die dieser Rufnummer zugeordnete Daten aus dem Speicher (SP) ausgelesen und zusätzlich im Speicher (ZSP) abgespeichert werden und daß nur die noch nicht als bereits vorhanden erkannten Rufnummern auf freie Speicherplätze des Speichers (SP) gespeichert und im Zwischenspeicher (ZSP) nur die Speicherplatznummern der Rufnummern im Speicher (SP) gespeichert werden.

2. Teilnehmerendeinrichtung nach Anspruch 1,
**dadurch gekennzeichnet**, daß durch Betätigen einer Taste (T1) der Tastatur (T) nacheinander die im Zwischenspeicher (ZSP) gespeicherten Rufnummern und/oder Daten abgerufen und an der Anzeigeeinrichtung (AE) dargestellt werden.

3. Teilnehmerendeinrichtung nach Anspruch 2,
**dadurch gekennzeichnet**, daß durch Betätigen einer Taste (T2) der Tastatur (T), für eine auf der Anzeigeeinrichtung (AE) entsprechend dargestellte Rufnummer, ein automatischer Verbindungsaufbau durchgeführt wird.

4. Teilnehmerendeinrichtung nach einem oder mehreren der Ansprüche 1 bis 3,
**dadurch gekennzeichnet**, daß zu jeder neu in den Speicher (SP) übernommenen Rufnummer mit Hilfe der Tastatur (T) die Teilnehmeradresse und der Name des Teilnehmers hinzufügbar ist und daß die Steuereinrichtung (ST) die neu übernommenen Daten alphabetisch nach Teilnehmeradresse und/oder Namen in die bereits vorhandenen Daten im Speicher (SP) einordnet.

5. Teilnehmerendeinrichtung nach einem oder mehreren der Ansprüche 1 bis 4,
**dadurch gekennzeichnet**, daß von dem anrufenden Teilnehmer ferngesteuert auch weitere Daten im Zwischenspeicher (ZSP) gespeichert werden können.

6. Teilnehmerendeinrichtung nach Anspruch 5,
**dadurch gekennzeichnet**, daß nach dem Speichern von weiteren Daten in dem Zwischenspeicher (ZSP) dem anrufenden Teilnehmer ein Quittungshörton und/oder eine Quittungsanzeige übermittelt werden.

7. Teilnehmerendeinrichtung nach einem oder mehreren der Ansprüche 1 bis 6,
**dadurch gekennzeichnet**, daß in der Teilnehmerendeinrichtung ein Vocoder (V) angeordnet ist, daß die von einem Teilnehmer gesprochene Rufnummer und/oder Daten mittels des Vocoders (V) in Digitalsignale umgewandelt werden und daß die Digitalsignale im Zwischenspeicher (ZSP) gespeichert werden.

8. Teilnehmerendeinrichtung nach einem oder mehreren der Ansprüche 1 bis 7,
**dadurch gekennzeichnet**, daß der Text für Ansagen, Hinweise und Bestätigungen im Zwischenspeicher (ZSP) oder Speicher (SP) gespeichert ist und daß mittels der Tastatur (T) diese Texte aus einem vorgegebenen Vorrat von Satzteilen, Worten und Ziffern nach Bedarf zusammenstellbar sind.

9. Teilnehmerendeinrichtung nach einem oder mehreren der Ansprüche 1 bis 8,
**dadurch gekennzeichnet**, daß durch einen berechtigten Teilnehmer die im Zwischenspeicher (ZSP) enthaltenen Informationen fernabfragbar sind.

## Claims

1. Subscriber terminal device having a dialling aid which has a memory (SP) for storing data, in particular subscriber numbers, names of subscribers, subscriber addresses etc., entered with a keyboard (T), having a display device (AE), having a control device (ST) connected to the dialling aid, keyboard (T) and display device (AE) and having a temporary memory (ZSP) fitted in the subscriber device, the control device (ST) controlling a comparison of the subscriber number coming from the calling subscriber with subscriber numbers stored in the memory (SP) and then controlling a storage of the subscriber number coming from the calling subscriber, **characterized in** that the temporary memory (ZSP), the control device (ST) and the memory (SP) are furthermore designed in such a way that the subscriber numbers coming from the calling subscribers are stored consecutively in the temporary memory (ZSP), that the control device (ST) automatically compares the subscriber number in the temporary memory (ZSP) with those in the memory (SP), that, in the case of a corresponding subscriber number, the data associated with said subscriber number are read out of the memory (SP) and are additionally stored in the memory (ZSP) and that only the subscriber numbers not yet recognized as already present are stored at free memory locations of the memory (SP) and only the memory location numbers of the subscriber numbers in the memory (SP) are stored in the temporary memory (ZSP).

2. Subscriber terminal device according to Claim 1, **characterized in** that, consecutively, the subscriber numbers stored in the temporary memory (ZSP) and/or data are retrieved and are displayed on the display device (AE) by actuating a key (T1) of the keyboard (T).

3. Subscriber terminal device according to Claim 2, **characterized in** that an automatic connection setup is carried out for a subscriber number suitably displayed on the display device (AE) by actuating a key (T2) of the keyboard (T).

4. Subscriber terminal device according to one or more of Claims 1 to 3, **characterized in** that the subscriber address and the name of the subscriber can be added to every subscriber number newly transferred to the memory (SP) with the aid of the keyboard (T) and in that the control device (ST) arranges the newly transferred data alphabetically in accordance with subscriber address and/or name in the data already present in the memory (SP).

5. Subscriber terminal device according to one or more of Claims 1 to 4, **characterized in** that, by remote control means, further data can also be stored in the temporary store (ZSP) by the calling subscriber.

6. Subscriber terminal device according to Claim 5, **characterized in** that, after the storage of further data in the temporary memory (ZSP), an audible acknowledgement tone and/or an acknowledgement display is transmitted to the calling subscriber.

7. Subscriber terminal device according to one or more of Claims 1 to 6, **characterized in** that a vocoder (V) is fitted in the subscriber terminal device, in that the subscriber number and/or data spoken by the subscriber are converted into digital signals by means of the vocoder (V), and in that the digital signals are stored in the temporary memory (ZSP).

8. Subscriber terminal device according to one or more of Claims 1 to 7, **characterized in** that the text for announcements, instructions and confirmations is stored in the temporary memory (ZSP) or memory (SP), and in that said texts can be assembled as required from an existing stock of sentence components, words and figures by means of the keyboard (T).

9. Subscriber terminal device according to one or more of Claims 1 to 8, **characterized in** that the information contained in the temporary memory (ZSP) can be remotely interrogated by an authorized subscriber.

## Revendications

1. Poste terminal d'abonné comportant un système auxiliaire de numérotation, qui comporte une mémoire (SP) servant à mémoriser des données introduites au moyen: d'un clavier (T), à savoir des numéros d'abonnés, des noms des abonnés, des adresses d'abonnés, etc., et comportant un dispositif d'affichage (AE), un dispositif de commande (ST) relié au dispositif auxiliaire de numérotation, au clavier (T) et au dispositif d'affichage (AE), et une mémoire intermédiaire (ZSP) disposée dans le dispositif d'abonné, le dispositif de commande (ST) commandant une comparaison du numéro d'appel arrivant de l'abonné appelant aux numéros d'appel mémorisés dans la mémoire (SP), puis une mémorisation du numéro d'appel arrivant de l'abonné appelant,
caractérisé en ce que la mémoire intermédiaire (ZSP), le dispositif de commande (ST) et la mémoire (SP) sont en outre agencés de telle sorte que les numéros d'appel arrivants des abonnés appelants sont mémorisés successivement dans la mémoire intermédiaire (ZSP), que le dispositif de commande (ST) compare automatiquement les numéros d'appel situés dans la mémoire intermédiaire (ZSP) à ceux situés dans la mémoire (SP), que dans le cas d'un numéro d'appel coïncident, les données, associées à ce numéro d'appel, sont lues à partir de la mémoire (SP) et sont mémorisées en supplément dans la mémoire (ZSP), et que seuls les numéros d'appel non encore identifiés comme étant déjà présents sont mémorisés en des emplacements libres de la mémoire (SP) et que seuls les numéros des emplacements de mémoire des numéros d'appel dans la mémoire (SP) sont mémorisés dans la mémoire intermédiaire (ZSP).

2. Poste terminal d'abonné selon la revendication 1, caractérisé en ce que grâce à l'actionnement d'une touche (T1) du clavier (T), les numéros d'appel et/ou les données, mémorisés dans la mémoire intermédiaire (ZSP), sont appelés et représentés successivement sur le dispositif d'affichage (AE).

3. Poste terminal d'abonné selon la revendication 2, caractérisé en ce que sous l'effet de l'actionnement d'une touche (T2) du clavier (T), l'établissement automatique d'une liaison est exécuté pour un numéro d'appel représenté de façon correspondante sur le dispositif d'affichage (AE).

4. Poste terminal d'abonné selon une ou plusieurs des revendications 1 à 3, caractérisé en ce que l'adresse et le numéro de l'abonné peuvent être ajoutés, à l'aide du clavier (T), à chaque numéro d'appel nouvellement transféré dans la mémoire (SP), et que le dispositif de commande (ST) range de façon alphabétique les données nouvellement transférées, en fonction d'adresses d'abonnés et/ou de noms dans les données déjà présentes dans la mémoire (SP).

5. Poste terminal d'abonné selon une ou plusieurs des revendications 1 à 4, caractérisé en ce que d'autres données sont également mémorisées dans la mémoire intermédiaire (ZSP), d'une manière commandée par l'abonné appelant.

6. Poste terminal d'abonné selon la revendication 5, caractérisé en ce que pour la mémorisation d'autres données dans la mémoire intermédiaire (ZSP), une tonalité d'accusé de réception et/ou un affichage d'accusé de réception sont transférés à l'abonné appelant.

7. Poste terminal d'abonné selon une ou plusieurs des revendications 1 à 6, caractérisé en ce qu'un vocodeur (V) est disposé dans le poste terminal d'abonné, que les numéros d'appel et/ou les données, indiqués par un abonné, sont convertis au moyen du vocodeur (V) en signaux numériques et que les signaux numériques sont mémorisés dans la mémoire intermédiaire (ZSP).

8. Poste terminal d'abonné selon une ou plusieurs des revendications 1 à 7, caractérisé en ce que le texte pour des annonces, des indications et des confirmations est mémorisé dans la mémoire intermédiaire (ZSP) ou dans la mémoire (SP) et qu'au moyen du clavier (T), ces textes peuvent être réunis le cas échéant à partir d'une réserve prédéterminée de parties de phrases, de mots et de chiffres.

9. Poste terminal d'abonné selon une ou plusieurs des revendications. 1 à 8, caractérisé en ce que les informations contenues dans la mémoire intermédiaire (ZSP) peuvent être interrogées à distance par un abonné autorisé.
